# EUROPEAN PATENT SPECIFICATION

(11) **EP 4 473 165 B1**
(45) Date of publication and mention of the grant of the patent: **07.10.2026**
(21) Application number: 23705847.4
(22) Date of filing: 16.01.2023
(51) Int. Cl.: E02F 9/26, B60P 1/04, G06T 17/00

(54) **SYSTEM AND METHOD FOR MEASURING MATERIAL SWELL OF MATERIAL LOADED IN A DUMP VEHICLE**
SYSTEM UND VERFAHREN ZUR MESSUNG DER MATERIALQUELLUNG VON IN EINEM KIPPFAHRZEUG GELADENEM MATERIAL
SYSTÈME ET PROCÉDÉ DE MESURE DE GONFLEMENT DE MATÉRIAU D'UN MATÉRIAU CHARGÉ DANS UN VÉHICULE À BENNE BASCULANTE

(30) Priority: 01.02.2022 US 202217590512
(43) Date of publication of application: 11.12.2024
(73) Proprietor: Caterpillar, Inc., Peoria, IL 61629-6450 (US)
(72) Inventor: WRIGHT, Christopher, Peoria, Illinois 61615 (US); STEINLAGE, Justin, L., Mackinaw, Illinois 61755 (US)
(74) Representative: Novagraaf Group
(86) International application number: PCT/US2023/060703
(87) International publication number: WO 2023/150421

(56) References cited:
- US-A1- 2011 148 856
- US-A1- 2021 189 697

## Description

### Technical Field

The present disclosure generally relates to a system and method of measuring the material swell of bank material removed from a landscape by a work machine as it excavates material from a site and transfers the excavated material to a dump vehicle.

### Background

Earth moving equipment such as backhoes, front-end loaders, and excavators are used to move earth, soil and other material from a dig site or landscape. When excavating or removing material from a dig site or bank of landscape, the material breaks up into different clumps and size particles creating voids that reduce the weight per volume. The swell % value is the percentage of original volume that a material increases when it is removed from its bank state and becomes loose.

Determining the material swell of material removed from a dig or landscape site is valuable in avoiding overloading dump vehicles, such as dump trucks. Dump vehicles have threshold limits on the amount of material that the vehicle can physically hold. Dump vehicles must also comply with legal weight limits set by state and federal regulations for use on local and federal roads. Overloading a dump vehicle with earth material can severely damage a truck and cause the truck to be damaged and/or inoperable. Similarly, an overloaded truck can damage roadways not built for use beyond certain weights and results in significant government fines.

It is the desire to know the volume of the material being placed in dump vehicles by the earth moving equipment during operation to avoid overloading the dump vehicle which removes the material from the site location. It is also desirable to know the volume of the material being placed in dump vehicles to comply with local and federal highway road regulations.

Traditional methods of determining the volume of material removed from a specific landscape site require computer software for creating digital models of the geography or topography of a site gathered by conventional surveying, aerial photography, or kinematic GPS surveying techniques. Other methods have made attempts to measure the volume of material removed from a bank by a work machine. For example, US Patent No. 6,085,583 to Oward discloses a method of using a representation of the excavation site and estimating the volume of material captured by a bucket of a digging machine using the trajectory of the bucket and the shape of the excavation site to determine when the bucket has reached a desired capacity. However, this method requires many assumption and results in less accurate volume measurements.

In another example, US Patent Publication No. 20210148086A1 to Bell discloses a system of autonomous or semi-autonomous earth shaping vehicles capable of filling earth into a fill location in a dig site. A first earth shaping vehicle configured with a hauling tool carrying a volume of earth navigates to the fill location. At the fill location, the first earth shaping vehicle navigates over a target tool path to fill earth from the hauling tool into the fill location. As the first earth shaping vehicle fills earth into the fill location, a measurement sensor coupled to the first earth shaping vehicle measures a compaction level of earth filled into the fill location. If the measured compaction level is determined to be below a threshold compaction level, the first earth shaping vehicle communicates a request for a second earth shaping vehicle configured with a compaction tool to compact earth in the fill location. A fill estimate engine is used to generate the point cloud representation of the current state of the site gathered using spatial sensors to determine a pre-excavation volume of earth in a dug hole and accesses, from a central computer or a remote server, a swell factor of the earth relating the volume of earth in the tool to the pre-excavation volume of earth in the hole. Using the pre-excavation volume of earth in the hole and the swell factor characteristic of the earth, the fill estimate engine estimates the volume of earth in the tool.

For earth moving equipment conducting the removal of material from a specified site, it is desirable to know the material swell of material removed from a site and transferred to a dump vehicle in real time during operation of the earth moving equipment to obtain an accurate material swell measurement, rather than relying on pre-loaded or pre-existing data which may be inaccurate.

US2021189697A1 discloses a display control system includes a work machine and a display control device. The display control device includes a map generation unit configured to generate a three-dimensional map representing a shape around the work machine based on depth information generated by a depth detection device and posture information generated by a posture detection device, a depth image generation unit configured to generate a depth image representing a depth of a range including a position of the work equipment in the three-dimensional map, and a display control unit configured to output a display signal to display the depth image.

### Summary of the Disclosure

The present invention provides a method, work machine and system in accordance with the claims.

In an aspect of the present disclosure a work machine for measuring the material swell is provided. The work machine comprises a frame, a ground engaging element supporting the frame for movement, an engine mounted in the frame to power the work machine, a working mechanism extending from the frame comprising a bucket; and at least one imaging device for measuring a material swell of a material removed from a site and transferred to a dump vehicle during operation of the work machine.

In another aspect of the present disclosure a system is disclosed comprising a dump vehicle, a work machine comprising a frame, a ground engaging element supporting the frame for movement; an engine mounted in the frame and a working mechanism extending from the frame comprising a bucket. The working mechanism further comprise at least one imaging device for measuring the material swell of a load of material removed from a site during operation of the work machine. The imaging device calculates the material swell of the load by continuously scanning images of the site and the dump vehicle during operation of the work machine as the work mechanism removes a load of material from the site and transfers the load in the dump vehicle. The bank volume of the load removed from the site and the excavated volume of the load transferred in the dump vehicle is measured from the disparity between images scanned by the imaging device to determine the material swell of the load of material.

In another aspect of the present disclosure, a method of measuring material swell of material loaded in a dump vehicle using a work machine is disclosed. The method includes providing an imaging device on the work machine. Scanning the site continuously with the imaging device. Scanning the dump vehicle continuously with the imaging device. Removing a load of material from the site with a work mechanism on the work machine. Calculating the bank volume of the load removed from the site. Transferring the load into the dump vehicle. Calculating an excavated volume of the load transferred in the dump vehicle. Calculating the material swell of the load from the bank volume and excavated volume.

These and other aspects and features of the present disclosure will be better understood upon reading the following detailed description when read in conjunction with the accompanying drawings.

### Brief Description of the Drawings

FIG. 1 is a perspective view of a work machine in accordance with the present disclosure.
FIG. 2 is a schematic view of a work machine at a dig site, according to an embodiment.
FIG 3 is a schematic view of a work machine transferring material to a dump vehicle, according to an embodiment of the present disclosure.
FIG 4 is a schematic view of the camera system, according to an embodiment of the present disclosure.
FIG 5 is a schematic view of the cameral system mounted on a portion of a work machine, according to an embodiment of the present disclosure.
FIG. 6 is a representation of sitemaps and corresponding disparity map generated of the site for determining the bank volume, according to an embodiment.
FIG. 7 is a representation of sitemaps and corresponding disparity map generated of the dump bed for determining the excavated volume, according to an embodiment.
FIG. 8 is a flow chart of the method of the present invention, according to an embodiment.

The figures depict one embodiment of the presented invention for purposes of illustration only. One skilled in the art will readily recognize from the following discussion that alternative embodiments of the structures and methods illustrated herein may be employed without departing from the principles described herein.

### Detailed Description

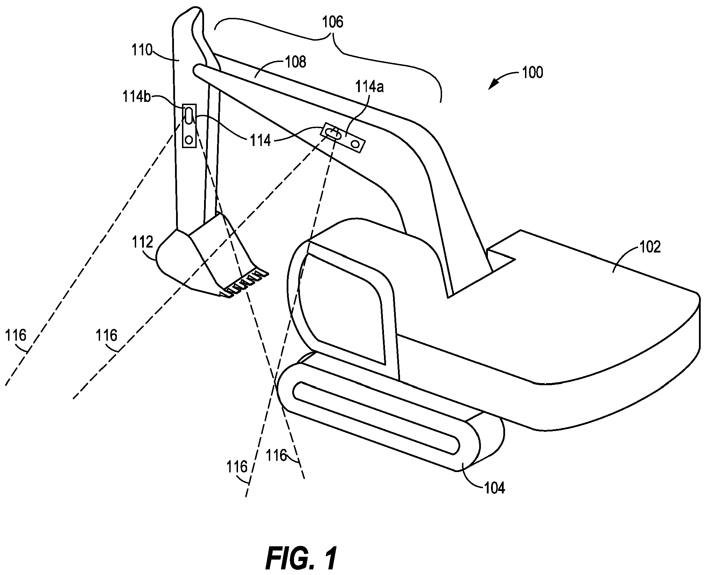

Referring now to FIG. 1, an exemplary work machine 100 is shown, illustrated as an excavator, and may be used, for example, for removing earth, soil, and other material from a landscape. Excavators are heavy equipment designed to move earth material from the ground or landscape at a dig site. Excavators are typically large and capable of excavating large volumes of earth at a single time by scraping or digging earth from beneath the ground or landscape surface. While the following detailed description describes an exemplary aspect in connection with the excavator, it should be appreciated that the description applies equally to the use of the present disclosure in other machines as well.

The work machine 100 comprises a frame 102 containing an engine 103 supported on a ground engaging element 104 illustrated as continuous tracks. It should be contemplated that the ground engaging element 104 may be any other type of ground engaging element 104 such as, for example, wheels, etc. The work machine 100 further includes a working mechanism 106 for conducting work, such as, for example, excavating landscapes or otherwise moving earth, soil, or other material. The working mechanism 106 includes a boom 108, an arm 110, and a bucket 112 used to remove earth, soil, and other material from a landscape site.

The work machine 100 further comprises an imaging device 114 for generating 3D site maps of the landscape during removal of material from a landscape site during operation of the work machine 100. The imaging device 114 may be positioned on the working mechanism 106 to obtain a field of view 116 at a landscape site. The imaging device 114 includes a plurality of imaging devices 114 and are positioned on the work machine 100 to capture images in its field of view 116 during operation of the work machine 100.

In the illustrated embodiment, the plurality of imaging devices 114 include a first imaging device 114a mounted on the boom 108, and a second imaging device 114b mounted on the arm 110. In other embodiments, there may be at least four imaging devices 114 with at least one imaging device 114 mounted on each side of the boom 108 and the arm 110. Imaging devices 114 may include stereo cameras, smart cameras, or smart vision systems having a dedicated processor onboard, including video processing acceleration provided by Field programmable Gate array (FPGA), digital signal processor (DSP), general purpose graphics processing unit (GP-GPU), or any other suitable microprocessor with supporting application software, capable of determining depth and volume from images or real-time videos.

In the illustrated embodiment, the first imaging device 114a is installed on the boom 108 and captures continuous images or videos in its field of view 116 of the landscape where the work machine 100 is operating. The second imaging device 114b is installed on the arm 110 and obtains continuous images or videos in its field of view 116 of the landscape where the work machine 100 is operating.

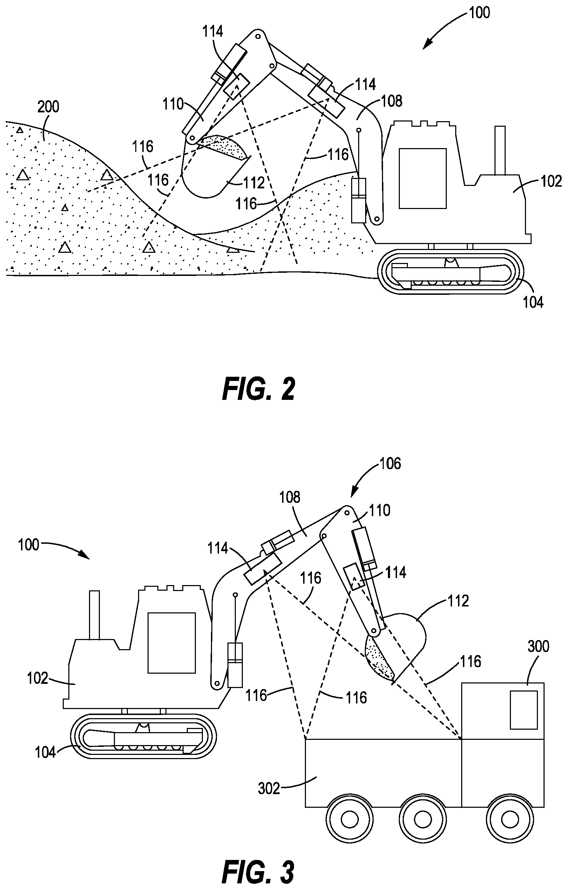

Referring now to FIG. 2, the work machine 100 is depicted schematically, illustrated as an excavator, at a site 200. The site 200 can be a bank of landscape, terrain, or other environment of earth, soil, or other material. The earth moving equipment are generally operated by a human operator, but may be autonomous.

Turning to FIG. 3, the work machine 100 is depicted transferring material to a dump vehicle 300. The dump vehicle 300 may be a dump truck or other common truck comprising a dump bed 302 capable of containing and removing material from the site 200 e.g. via road, highway, etc. The imaging device 114 integrated on the work mechanism 106 uses its field of vision 116 to capture images of the dump vehicle 300 and the dump bed 302 to analyze the volume in the dump bed 302. The imaging device 114 may also identify the dump vehicle 300 by image recognition and/or vehicle fiducial marking, and the like, and may recall features of the dump vehicle 300 such as weight and volume threshold limits, towing capacity, and the like.

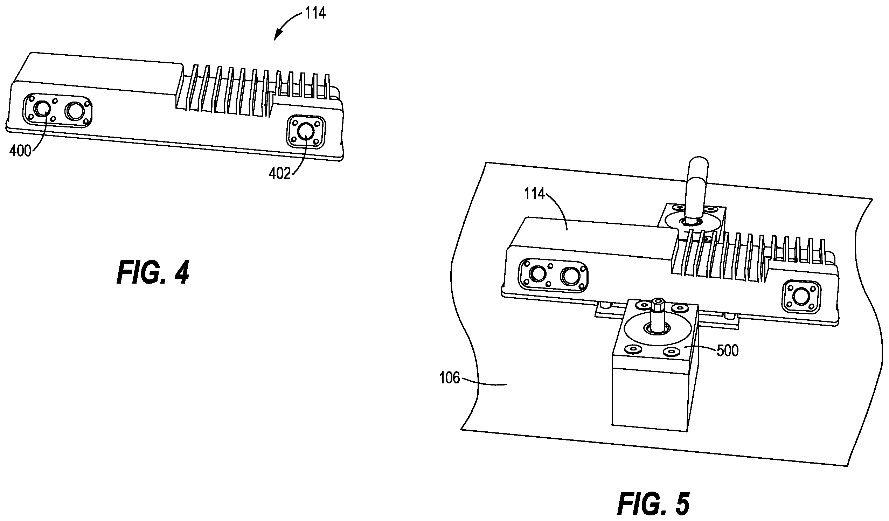

Referring to FIG. 4, an imaging device 114 is depicted. In the illustrated embodiment, the imaging device 114 is a stereo camera comprising at least one monochrome camera lens 400 and at least one color camera lens 402. The stereo cameras equipped with at least one monochrome camera lens 400 allows the imaging device 114 to record each position on an image and show a different amount of light. The monochrome features include all forms of black-and-white photography generally known in the arts. The stereo camera equipped with may also be equipped with at least one color camera lens 402 that includes all known color hues.

Referring to FIG. 5, the imaging device 114 is depicted on a mount 500 on a portion of the work mechanism 106 of the work machine 100. The mount 500 may be a magnetic mount, or of another generally known mount to integrate the imaging device 114 on the working mechanism 106. According to one embodiment, the mount 500 may integrate the imaging device 114 on the boom 108 or the arm 106 of the work mechanism 106 as depicted in FIGS. 1-3.

The imaging device 114 utilizes a 3D point cloud system generally known in the arts that stiches points together to create the 3D cloud map of the site 200 and the dump bed 302. The imaging device 114 perceives the terrain of the site 200 in three-dimensions (3D) with vision capable of determining the depth and distance of objects around the work machine 100 in the imaging device's 114 field of view 116 by continuously mapping. Continuous mapping refers to a continuous function between two images of topological spaces, generally known in the arts. The continuous mapping allows for detecting the spatial context of the terrain. The imaging device 114 may determine the volume of the material removed at a site 102 and transferred to a dump bed 302 by generating a 3D point map through 3D continuous mapping and generating a disparity map between new and previous 3D point maps. 3D cloud maps are used in real-time to estimate the volume removed by each dig and transfer of the work machine 100. The imaging device 114 may be capable of capturing the site 200 terrain during the day and at night, with or without color.

As illustrated in one embodiment of a work machine 100, the imaging device 114 on an excavator may consist of at least two stereo cameras placed on either side of the boom 106 and arm 110 of the work mechanism 106 to obtain an acceptable field of view 116 of the site. In another embodiment, the imaging device 114 includes a set of four stereo camera modules mounted on each side of the boom 106 and/or stick 110. The stereo camera imaging devices 114 uses the field of view 116 of the environment around the excavator at the site 200 to generate 3D point maps continuously. Stereo cameras have features which transform camera images into 3D depth maps and point clouds, and delivers them at high frame rates, transforming pixel data into accurate range measurements. Consequently, the disclosure may produce both an accurate depth map and high-quality images of the site 200 terrain and dump bed 302.

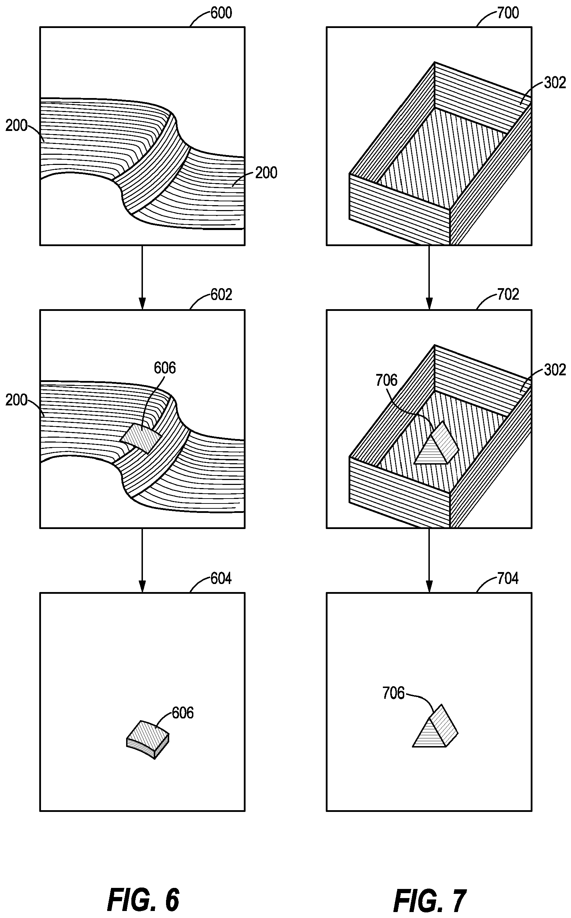

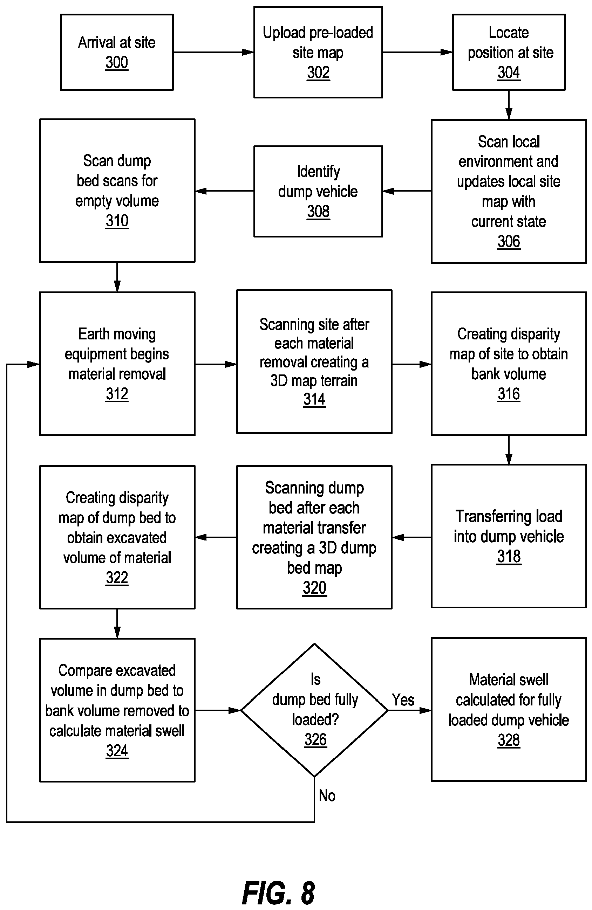

Now referring to FIGS. 7 and 8, a set of representative site maps and disparity maps are shown of the site 200 and the dump bed 302 respectively. A disparity map refers to the pixel difference or motion between a pair of images, generally known in the arts.

As the work machine 100 operates, the imaging device 114 continuously scans the environment around the work machine 100 as it removes material from the site 200. The imaging device 114 scans the site 200, outputs 3D point clouds, and creates a first site scan 600. The first site scan 600 is generated before removing material from the site 200 and a new site scan 602 is generated after the material is removed. The imaging device 114 compares the 3D image data of the starting site scan 600 and new site scan 602 to generate a disparity site map 604 to measure a bank volume 606 of the material removed from the site 200. The disparity site map 604 computes the difference between the starting site scan 600 and new site scan 602 using generally known computing methods to determine the bank volume 606 of material removed by the work machine 100.

In one embodiment, the work machine 100 removes material from a bank of landscape at a site 200 and transfers the removed material into the dump bed 302 of the dump vehicle 300. As the work machine 100 fills the dump bed 302 with the removed bank material 606, the imaging device 114 records the volume of the material transferred in the dump bed 302 of the dump vehicle 300.

The imaging device 114 also outputs 3D point clouds to creates a first bed scan 700 of the dump bed 302 before transferring the bank volume 606 in the dump bed 302 and generates a new bed scan 702 after the material is transferred. The imaging device 114 compares the first bed scan 700 and new bed scan 702 to generate a disparity bed map 704 to measure an excavated volume 706 of the material removed from the site 200. The disparity bed map 704 computes the difference between the first bed scan 700 and new bed scan 702 using generally known computing methods to determine the excavated volume 706 of material transferred by the work machine 100 in the dump vehicle 300. The disparity bed map 704 demonstrates the volume of the load of material transferred into the dump bed 302.

The excavated volume 706 of material is the loose volume of material removed from the site 200. As the bank volume 606 is transferred into the dump bed 302 the excavated material is loosened into a larger excavated volume 706. When the excavated volume 706 is transferred into the dump bed 302, the available volume in the dump bed 302 is reduced and the imaging device 114 tracks the volume. The available weight allowed by the dump vehicle 300's towing capacity may be recalled to prevent the work machine 100 from transferring additional material in the dump bed 302 and prevent overloading damage to the dump vehicle 300.

At the end of each load, the excavated volume 706 in the dump bed 302 is compared to the bank volume 706 of the material removed from the site 200 to determine the material swell. The material swell = (Volume of load transferred in dump vehicle) / (Volume of material removed from site) = (Excavated Volume 706) / (Bank Volume 606). The material swell can be calculated per scoop and per filled dump vehicle 300. A total material swell for the filled dump vehicle 300 may be the average of material swells for each load transferred in a dump vehicle 300.

The imaging device 114 may have capability to identify the dump vehicle 300 for determining the volume and the weight limits of the dump vehicle 300 to prevent overloading by using the material swell. The work machine 100 cycles back and forth between the site 200 and dump vehicle 300 until the dump bed 302 is fully loaded and there is no available volume for additional excavated material in the dump bed 302. The work machine 100 may cycle back and forth between the site 200 and dump bed 302 until the dump vehicle 300 is at maximum weight and cannot carry additional material.

The material swell for the each load of material removed and transferred in the dump bed 302 may be tagged with a timestamp, GPS location of the removal site, and vehicle identification numbers for future use. The work machine 100 may be equipped with a GPS system or other common geographic location device or features.

### Industrial Applicability

In general, the present disclosure can find applicability in many instances, including but not limited to excavation, agricultural, moving, farming, and the like. While the depicted embodiment is shown as described in general with an excavator and a dump truck it is to be understood that these are only exemplary and can be used with equal efficiency with many other work machines such as, but not limited to, backhoes, front end loaders, dump lines, mining trucks, millers, and the like.

Referring to FIG. 8, a method according to the present disclosure is shown in a flow chart format. The present disclosure provides a method for measuring the material swell of the load of material removed and transferred in the dump vehicle 300 by the work machine 100. The method includes the work machine 100 comprising the imaging device 114 that allows for continuous 3D image mapping around the work machine 100.

The method starts with a first step 800 of arriving at the site 200 with the work machine 100. The work machine 100 uploads a pre-existing site map similar to the first site scan 600 of the site 200, as indicated by a step 802. In some instances, the work machine 100 may already be located at the site 100. The pre-existing site map of the environment at the site 200 may be derived from a previous drone scan of the site 200, or what is otherwise available. The work machine 100 then locates its position at the site 200 in a step 804. The work machine 100 may have GPS capability for accurate location positioning at the site 200. If no pre-existing site map exists, then the imaging device 114 may begin by generating the first site scan 600 at the site 200. The pre-existing site map and a starting site map 600 may be identical.

The imaging device 114 then begins scanning the environment in a step 806 at the site 200 around the work machine 100 to create the first site scan 600. For example, the imaging device 114 would scan the environment, by taking images or videos, and update the work machine 100 with the current state of the environment at the site 102. A disparity may be computed of the volume removed from the site 200 by supporting software in the imaging device 114.

In a step 808, the work machine 100 then locates the dump vehicle 300 or other deposit site using the imaging device 114 and scans the dump bed 302 to generate the first bed scan 700 of the dump bed 302 in a step 810. The dump vehicle 300 may also be located or identified through a pre-existing site map, a driver app, image recognition, a GPS system, and/or vehicle fiducial marking, and the like. The dump bed 302 may be identified using machine learning generally known in the art. One skilled in the art may recognize that the dump vehicle 300 may be identified earlier or at any point in the method and scans the dump bed 302 for a first bed scan 700 as soon as the dump vehicle 300 is identified. Identifying the dump vehicle 300 allows the imaging device 114 to recall vehicle characteristics of the dump vehicle 300 such as weight limits and towing capacity.

Next, in a step 812, the work machine 100 begins digging and removes a load of bank material from the site 200. As a load of bank material is removed from the site 200, the imaging device 114 continuously scans by taking images of the site 200 around the work machine 100 and updating the new site scan 602 during operation as each load is removed from the site 200, in a step 814.

In a step 816, the disparity site map 604 is generated comparing the new site scan 602 with the first site scan 600. The disparity site map 604 demonstrates the difference in volume of material removed from the site 200 to obtain the bank volume 606 removed for each dig or load removed. The imaging device 114 records the disparity site map 604.

Afterwards, the work machine 100 dumps or transfers the load of excavated material into the dump bed 302 in a step 818. The imaging device 114 scans the dump bed 302 for a new bed scan 702 of the dump bed 302 in a step 818 to create 3D site maps of the dump bed 302, similar to the sitemaps of the site 200.

The new bed scan 702 is compared with the first bed scan 700. A disparity bed map 704 is generated for determining the excavated volume 706 of the load in the dump bed 302 in a step 822. The imaging device 114 computes the disparity of volume between the first bed scan 700 and the new bed scan 207 to obtain the excavated volume 706 of material transferred in the dump bed 302. The available empty volume in the dump bed 302 is reduced with each load of excavated material transferred in the dump bed 302. The imaging device 114 tracks the excavated volume 706 transferred in the dump bed 302 for each transfer of load.

Based on all of the foregoing, the present disclosure significantly improves upon the prior art by comparing the bank volume 606 removed from the site 200 with the excavated volume 706 of material in the dump bed 302 to determine the material swell for each load, in a step 824.

As shown by step 826, the work machine 100 may determine if the dump vehicle 300 has reached a max volume of material or a max weight capacity of material by using the material swell. The work machine 100 will cycles back and forth between removing the material from the site 200 and dumping or transferring loads of the now loose bank material, the excavated material, in the dump vehicle 300. The work machine 100 continues this cycle until the dump bed 302 does not have any available volume to receive any additional loads of material by weight or by volume. The work machine 100 may recall the dump vehicle 300 characteristics from identifying the dump vehicle 300 in step 808 to prevent overloading the dump vehicle 300.

In a step 828, an average material swell may be calculated when the dump vehicle 300 has been filled. The average material swell can be determined from a total bank volume removed from the site 200 and a total excavated volume transferred in the dump vehicle 300.

The material swell for each load and the filled dump vehicle 300 may be saved and tagged with a timestamp, GPS location of the removal site, and the vehicle identification numbers.

From the foregoing, it can be seen that the technology disclosed herein has industrial applicability in a variety of settings such as, but not limited to measuring the material swell of material removed from the site 200 and transferred to the dump vehicle 300.

It is valuable to determine, in real time, the material swell of site material removed from a dig or landscape site to avoid overloading the dump vehicles 300 which can cause it to be damaged and/or inoperable. Determining the material swell can also be valuable in ensuring dump vehicles comply with legal weight limits set by state and/or federal regulations for driving on local and federal roads.

Other aspects, objects and advantages of the present invention can be obtained from a study of the drawings, the disclosure and the appended claims.

While particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the scope defined in the appended claims.

## Claims

1. A method of measuring material swell of material loaded in a dump vehicle (300) comprising a dump bed (302) using a work machine (100) comprising a frame (102), an engine (103), a ground engaging element (104), a working mechanism (106), and a GPS location system, the method comprising:
providing an imaging device (114) on the work machine (100);
identifying the dump vehicle (300) at the site (200) by one of an operator, a driver app, an image recognition feature, and vehicle fiducial marking;
scanning the site (200) and the dump vehicle (300) with the imaging device (114) continuously during operation of the work machine (100);
removing a load of material from the site (200) with the working mechanism (106) and transferring the load of material into the dump bed (302) of the dump vehicle (300);
calculating a bank volume (606) of the load with the imaging device (114);
calculating an excavated volume (706) of the load with the imaging device (114);
calculating the material swell of the load with the imaging device (114).
removing additional loads of material from the site (200) and transferring the additional loads to the dump vehicle (300) until the dump vehicle (300) reaches a dump threshold;
calculating a final material swell of a total load volume transferred from the site (200) and into the dump vehicle (300) when the dump vehicle (300) reaches the dump threshold;
scanning the site (200) and dump vehicle (300) by continuous 3D image mapping with the imaging device (114);
generating a disparity site map (604) of the site (200) to determine the bank volume (606) from continuously 3D image mapping with the imaging device (114);
generating a disparity bed map (704) of the dump vehicle (300) to determine the excavated volume (706) from continuously 3D image mapping with the imaging device (114);
calculating the material swell by comparing the bank volume (606) with the excavated volume (706); and
recording the material swell and the final material swell with a timestamp, a GPS location tag of the site (200), and a vehicle identification number of the dump vehicle (300).

2. The method according to claim 1, wherein the work machine (100) is an excavator comprising the work mechanism further comprising a boom (108), an arm (110), and a bucket (112); and
the imaging device (114) is a plurality of imaging devices (114) mounted on a side of the boom (108) and a side of the arm (110) of the excavator.

3. The method according to claim 2, wherein the plurality of imaging devices (114) are magnetically mounted on the work machine (100).

4. The method according to claim 2, wherein the plurality of imaging devices (114) further comprising a plurality of stereo cameras (114); and
the stereo cameras further comprising at least one monochrome lens (400) and at least one color lens (402).

5. A work machine (100) comprising:
a frame (102);
a ground engaging element (104) supporting the frame (102) for movement;
an engine (103) mounted on the frame (102);
a working mechanism (106) extending from the frame (102) comprising a bucket (112); and
at least one imaging device (114) configured to measure a material swell of a load of material removed from a site (200) and transferred to a dump vehicle (300) during operation of the work machine (100) by continuously scanning the site (200) and the dump vehicle (300); and
wherein the at least one imaging device (114) comprises a processor configured to generate 3D point maps of the site (200) and the dump vehicle (300), the processor being further configured to generate a disparity map of the site (200) and the dump vehicle (300).

6. A system comprising:
a dump vehicle (300);
the work machine (100) of claim 5;
wherein the at least one imaging device (114) is configured to determine the material swell for each load removed from the site (200) and transferred to the dump vehicle (300) by comparing a bank volume (606) of the load removed from the site (200) determined by the imaging device (114) and an excavated volume (706) of the load transferred in the dump vehicle (300) determined by the imaging device (114); and
wherein the imaging device (114) is configured to use the material swell to monitor the dump vehicle (300) to prevent overloading of the dump vehicle (300) when transferring the load.

7. The system according to claim 6, wherein the imaging device (114) is configured to continuously scan the site (200) by continuously 3D mapping the site (200) and the dump vehicle (300) and generate 3D disparity maps to determine the bank volume (606) removed from the site (200) and the excavated volume (706) transferred in the dump vehicle (300) to calculate the material swell of the load.

8. The system according to claim 6, wherein the work machine (100) is configured to identify the dump vehicle (300) by an operator, a driver app, an image recognition feature, or vehicle fiducial marking.

9. The system according to claim 7, wherein the imaging device (114) is configured to identify the dump vehicle (300) image recognition feature or vehicle fiducial marking and recall the weigh and volume capacity of the dump vehicle (300).

10. The system according to claim 9, wherein the imaging device (114) is configured to record and track the material swell with a timestamp, a GPS location tag of the site (200), and a vehicle identification number of the dump vehicle (300).

## Patentansprüche

1. Verfahren zum Messen der Materialauflockerung von Material, das in ein Kippfahrzeug (300) geladen ist, umfassend eine Kippmulde (302), durch Verwenden einer Arbeitsmaschine (100), umfassend einen Rahmen (102), einen Motor (103), ein Bodeneingriffselement (104), einen Arbeitsmechanismus (106) und ein GPS-Ortungssystem, das Verfahren umfassend:
Bereitstellen einer Bildgebungsvorrichtung (114) an der Arbeitsmaschine (100);
Identifizieren des Kippfahrzeugs (300) an dem Einsatzort (200) durch eines von einem Bediener, einer Fahrer-App, einem Bilderkennungsmerkmal und einer Fahrzeugreferenzmarkierung;
kontinuierliches Abtasten des Einsatzortes (200) und des Kippfahrzeugs (300) mit der Bildgebungsvorrichtung (114) während des Betriebs der Arbeitsmaschine (100);
Entfernen einer Materialladung von dem Einsatzort (200) mit dem Arbeitsmechanismus (106) und Überführen der Materialladung in die Kippmulde (302) des Kippfahrzeugs (300);
Berechnen eines gewachsenen Volumens (606) der Ladung mit der Bildgebungsvorrichtung (114);
Berechnen eines ausgehobenen Volumens (706) der Ladung mit der Bildgebungsvorrichtung (114);
Berechnen der Materialauflockerung der Ladung mit der Bildgebungsvorrichtung (114).
Entfernen zusätzlicher Materialladungen von dem Einsatzort (200) und Überführen der zusätzlichen Ladungen zu dem Kippfahrzeug (300), bis das Kippfahrzeug (300) eine Kippschwelle erreicht;
Berechnen einer endgültigen Materialauflockerung eines gesamten Ladevolumens, das von dem Einsatzort (200) und in das Kippfahrzeug (300) überführt wird, wenn das Kippfahrzeug (300) die Kippschwelle erreicht;
Abtasten des Einsatzortes (200) und des Kippfahrzeugs (300) durch kontinuierliches 3D-Bildabbilden mit der Bildgebungsvorrichtung (114);
Erzeugen einer Disparitätseinsatzortsabbildung (604) des Einsatzortes (200), um das gewachsene Volumen (606) aus einem kontinuierlichen 3D-Bildabbilden mit der Bildgebungsvorrichtung (114) zu bestimmen;
Erzeugen einer Disparitätsmuldenabbildung (704) des Kippfahrzeugs (300), um das ausgehobene Volumen (706) aus einem kontinuierlichen 3D-Bildabbilden mit der Bildgebungsvorrichtung (114) zu bestimmen;
Berechnen der Materialauflockerung durch Vergleichen des gewachsenen Volumens (606) mit dem ausgehobenen Volumen (706); und
Aufzeichnen der Materialauflockerung und der endgültigen Materialauflockerung mit einem Zeitstempel, einer GPS-Ortungsmarkierung des Einsatzortes (200) und einer Fahrzeugidentifikationsnummer des Kippfahrzeugs (300).

2. Verfahren nach Anspruch 1, wobei die Arbeitsmaschine (100) ein Bagger ist, umfassend den Arbeitsmechanismus, ferner umfassend einen Ausleger (108), einen Arm (110) und eine Schaufel (112); und
die Bildgebungsvorrichtung (114) eine Vielzahl von Bildgebungsvorrichtungen (114) ist, die an einer Seite des Auslegers (108) und einer Seite des Arms (110) des Baggers montiert sind.

3. Verfahren nach Anspruch 2, wobei die Vielzahl von Bildgebungsvorrichtungen (114) an der Arbeitsmaschine (100) magnetisch montiert sind.

4. Verfahren nach Anspruch 2, wobei die Vielzahl von Bildgebungsvorrichtungen (114) ferner eine Vielzahl von Stereokameras (114) umfasst; und
die Stereokameras ferner umfassend mindestens eine monochrome Linse (400) und mindestens eine Farblinse (402).

5. Arbeitsmaschine (100), umfassend:
einen Rahmen (102);
ein Bodeneingriffswerkzeug (104), das den Rahmen (102) bei der Bewegung stützt;
einen Motor (103), der auf dem Rahmen (102) montiert ist;
einen Arbeitsmechanismus (106), der aus dem Rahmen (102) erstreckt, umfassend eine Schaufel (112); und
mindestens eine Bilderfassungsvorrichtung (114), die konfiguriert ist, um eine Materialauflockerung einer Materialladung, die von einem Einsatzort (200) abgetragen und an ein Kippfahrzeug (300) überführt wird, während des Betriebs der Arbeitsmaschine (100) durch kontinuierliches Abtasten des Einsatzortes (200) und des Kippfahrzeugs (300) zu messen; und
wobei die mindestens eine Bildgebungsvorrichtung (114) einen Prozessor umfasst, der konfiguriert ist, um 3D-Punktabbildungen des Einsatzortes (200) und des Kippfahrzeugs (300) zu erzeugen, wobei der Prozessor ferner konfiguriert ist, um eine Disparitätsabbildung des Einsatzortes (200) und des Kippfahrzeugs (300) zu erzeugen.

6. System, umfassend:
ein Kippfahrzeug (300);
die Arbeitsmaschine (100) nach Anspruch 5;
wobei die mindestens eine Bildgebungsvorrichtung (114) konfiguriert ist, um die Materialauflockerung für jede von dem Einsatzort (200) entfernte und in das Kippfahrzeug (300) überführte Ladung durch Vergleichen eines durch die Bildgebungsvorrichtung (114) bestimmten gewachsenen Volumens (606) der von dem Einsatzort (200) entfernten Ladung und eines durch die Bildgebungsvorrichtung (114) bestimmten ausgehobenen Volumens (706) der in das Kippfahrzeug (300) überführten Ladung zu bestimmen; und
wobei die Bildgebungsvorrichtung (114) konfiguriert ist, um die Materialauflockerung zu verwenden, um das Kippfahrzeug (300) zu überwachen, um ein Überladen des Kippfahrzeugs (300) beim Überführen der Ladung zu verhindern.

7. System nach Anspruch 6, wobei die Bildgebungsvorrichtung (114) konfiguriert ist, um den Einsatzort (200) durch kontinuierliches 3D-Abbilden des Einsatzortes (200) und des Kippfahrzeugs (300) kontinuierlich abzutasten und 3D-Disparitätsabbildungen zu erzeugen, um das von dem Einsatzort (200) entfernte gewachsene Volumen (606) und das in das Kippfahrzeug (300) überführte ausgehobene Volumen (706) zu bestimmen, um die Materialauflockerung der Ladung zu berechnen.

8. System nach Anspruch 6, wobei die Arbeitsmaschine (100) konfiguriert ist, um das Kippfahrzeug (300) durch einen Bediener, eine Fahrer-App, ein Bilderkennungsmerkmal oder eine Fahrzeugreferenzmarkierung zu identifizieren.

9. System nach Anspruch 7, wobei die Bildgebungsvorrichtung (114) konfiguriert ist, um das Bilderkennungsmerkmal oder die Fahrzeugreferenzmarkierung des Kippfahrzeugs (300) zu identifizieren und die Gewichts- und Volumenkapazität des Kippfahrzeugs (300) abzurufen.

10. System nach Anspruch 9, wobei die Bildgebungsvorrichtung (114) konfiguriert ist, um die Materialauflockerung mit einem Zeitstempel, einer GPS-Ortungsmarkierung des Einsatzortes (200) und einer Fahrzeugidentifikationsnummer des Kippfahrzeugs (300) aufzuzeichnen und zu verfolgen.

## Revendications

1. Procédé de mesure de gonflement de matériau d'un matériau chargé dans un véhicule à benne (300) comprenant une carrosserie-benne (302) à l'aide d'une machine de travail (100) comprenant un châssis (102), un moteur (103), un élément de mise en prise au sol (104), un mécanisme de travail (106) et un système de localisation GPS, le procédé comprenant :
la fourniture d'un dispositif d'imagerie (114) sur la machine de travail (100) ;
l'identification du véhicule à benne (300) sur le site (200) par l'un parmi un opérateur, une application de conducteur, une fonction de reconnaissance d'image et un repère de fond de chambre de véhicule ;
le balayage en continu du site (200) et du véhicule à benne (300) avec le dispositif d'imagerie (114) pendant le fonctionnement de la machine de travail (100) ;
le retrait d'une charge de matériau à partir du site (200) avec le mécanisme de travail (106) et le transfert de la charge de matériau dans la carrosserie-benne (302) du véhicule à benne (300) ;
le calcul d'un volume en place (606) de la charge avec le dispositif d'imagerie (114) ;
le calcul d'un volume excavé (706) de la charge avec le dispositif d'imagerie (114) ;
le calcul du gonflement de matériau de la charge avec le dispositif d'imagerie (114).
le retrait de charges supplémentaires de matériau à partir du site (200) et le transfert des charges supplémentaires vers le véhicule à benne (300) jusqu'à ce que le véhicule à benne (300) atteigne un seuil de décharge ;
le calcul d'un gonflement de matériau final d'un volume de charge total transféré à partir du site (200) et dans le véhicule à benne (300) lorsque le véhicule à benne (300) atteint le seuil de décharge ;
le balayage du site (200) et du véhicule à benne (300) par mappage d'image 3D continu avec le dispositif d'imagerie (114) ;
la génération d'une carte de site de disparité (604) du site (200) afin de déterminer le volume en place (606) à partir du mappage d'image 3D continu avec le dispositif d'imagerie (114) ;
la génération d'une carte de carrosserie de disparité (704) du véhicule à benne (300) afin de déterminer le volume excavé (706) à partir du mappage d'image 3D continu avec le dispositif d'imagerie (114) ;
le calcul du gonflement de matériau en comparant le volume en place (606) avec le volume excavé (706) ; et
l'enregistrement du gonflement de matériau et du gonflement de matériau final avec un horodatage, une étiquette de localisation GPS du site (200), et un numéro d'identification de véhicule du véhicule à benne (300).

2. Procédé selon la revendication 1, dans lequel la machine de travail (100) est une excavatrice qui comprend le mécanisme de travail qui comprend en outre une flèche (108), un bras (110) et un godet (112) ; et
le dispositif d'imagerie (114) est une pluralité de dispositifs d'imagerie (114) montés sur un côté de la flèche (108) et un côté du bras (110) de l'excavatrice.

3. Procédé selon la revendication 2, dans lequel la pluralité de dispositifs d'imagerie (114) sont montés magnétiquement sur la machine de travail (100).

4. Procédé selon la revendication 2, dans lequel la pluralité de dispositifs d'imagerie (114) comprenant en outre une pluralité de caméras stéréo (114) ; et
les caméras stéréo comprenant en outre au moins un objectif monochrome (400) et au moins un objectif de couleur (402).

5. Machine de travail (100), comprenant :
un châssis (102) ;
un élément de mise en prise au sol (104) supportant le châssis (102) pour le déplacement ;
un moteur (103) monté sur le châssis (102) ;
un mécanisme de travail (106) s'étendant du châssis (102), qui comprend un godet (112) ; et
au moins un dispositif d'imagerie (114) configuré pour mesurer un gonflement de matériau d'une charge de matériau retiré d'un site (200) et transférée vers un véhicule à benne (300) pendant le fonctionnement de la machine de travail (100) en balayant en continu le site (200) et le véhicule à benne (300) ; et
dans lequel l'au moins un dispositif d'imagerie (114) comprend un processeur configuré pour générer des cartes de points 3D du site (200) et du véhicule à benne (300), le processeur étant en outre configuré pour générer une carte de disparité du site (200) et du véhicule à benne (300).

6. Système, comprenant :
un véhicule à benne (300) ;
une machine de travail (100) selon la revendication 5 ;
dans lequel l'au moins un dispositif d'imagerie (114) est configuré pour déterminer le gonflement de matériau pour chaque charge retirée du site (200) et transférée vers le véhicule à benne (300) en comparant un volume en place (606) de la charge retirée du site (200) déterminé par le dispositif d'imagerie (114) et un volume excavé (706) de la charge transférée dans le véhicule à benne (300) déterminé par le dispositif d'imagerie (114) ; et
dans lequel le dispositif d'imagerie (114) est configuré pour utiliser le gonflement de matériau pour surveiller le véhicule à benne (300) afin d'empêcher une surcharge du véhicule à benne (300) lors du transfert de la charge.

7. Système selon la revendication 6, dans lequel le dispositif d'imagerie (114) est configuré pour balayer en continu le site (200) par mappage 3D continu du site (200) et du véhicule à benne (300) et pour générer des cartes de disparité 3D afin de déterminer le volume en place (606) retiré du site (200) et le volume excavé (706) transféré dans le véhicule à benne (300) de manière à calculer le gonflement de matériau de la charge.

8. Système selon la revendication 6, dans lequel la machine de travail (100) est configurée pour identifier le véhicule à benne (300) par un opérateur, une application de conducteur, une fonction de reconnaissance d'image, ou un repère de fond de chambre de véhicule.

9. Système selon la revendication 7, dans lequel le dispositif d'imagerie (114) est configuré pour identifier la fonction de reconnaissance d'image ou le repère de fond de chambre de véhicule du véhicule à benne (300), et rappeler la capacité de poids et de volume du véhicule à benne (300).

10. Système selon la revendication 9, dans lequel le dispositif d'imagerie (114) est configuré pour enregistrer et suivre le gonflement de matériau avec un horodatage, une étiquette de localisation GPS du site (200), et un numéro d'identification de véhicule du véhicule à benne (300).
